# EUROPÄISCHE PATENTSCHRIFT

(11) **EP 2 337 696 B1**
(45) Veröffentlichungstag und Bekanntmachung des Hinweises auf die Patenterteilung: **13.03.2013**
(21) Anmeldenummer: 09736206.5
(22) Anmeldetag: 12.10.2009
(51) Int. Cl.: B60H 1/00, B61D 27/00, H05K 7/20

(54) **KLIMATISIERUNGSANORDNUNG**
AIR CONDITIONING ARRANGEMENT
AGENCEMENT DE CLIMATISATION

(30) Priorität: 20.10.2008 DE 102008052112
(43) Veröffentlichungstag der Anmeldung: 29.06.2011
(73) Patentinhaber: Bombardier Transportation GmbH, 10785 Berlin (DE)
(72) Erfinder: KRENTZ, Reinhard, 13055 Berlin (DE); BOMBRYCK, Volker, 16767 Leegebruch (DE); SEIDLER, Gabriele, 16761 Hennigsdorf (DE); ROSSI, Roberto, I-17019 Varazze (Savona) (IT)
(74) Vertreter: Cohausz & Florack
(86) Internationale Anmeldenummer: PCT/EP2009/063269
(87) Internationale Veröffentlichungsnummer: WO 2010/046261

(56) Entgegenhaltungen:
- EP-A- 0 943 520
- EP-A- 1 637 709
- DE-A1- 2 801 660
- US-A1- 2005 061 497

## Beschreibung

Die Erfindung betrifft eine Klimatisierungsanordnung für einen Aufenthaltsraum, insbesondere Führerstand oder Passagierraum, eines Schienenfahrzeugs, insbesondere Triebfahrzeugs, mit einem Klimagerät zur Regelung der Lufttemperatur im Aufenthaltsraum, mit einer ersten Kühleinrichtung, die in das Klimagerät integriert ist, mit einem ersten Leitungssystem, das mit der ersten Kühleinrichtung verbunden ist und das mindestens einen Luftkanal aufweist, der zum Aufenthaltsraum führt, mit mindestens einem Schaltschrank, mit einer zweiten Kühleinrichtung und mit einem zweiten Leitungssystem, das mit der zweiten Kühleinrichtung und mit dem mindestens einen Schaltschrank verbunden ist und das mindestens einen Kühlkreis aufweist, wobei die zweite Kühleinrichtung in das Klimagerät integriert ist. Eine Klimatisierungsanordnung mit diesen im Oberbegriff des Anspruchs 1 genannten Merkmalen ist aus der US 2005/001497 A1 bekannt. Ferner betrifft die Erfindung ein Schienenfahrzeug mit einer solchen Klimatisierungsanordnung.

Eine Klimatisierungsanordnung der zuvor beschriebenen Art ist, beispielsweise bei Triebfahrzeugen, insbesondere dann erforderlich, wenn der Führerstand klimatisiert belüftet wird und insbesondere nicht von einem Klimagerät versorgt wird, das weitere Räume, insbesondere für Passagiere vorgesehene Räume, des Schienenfahrzeugs belüftet.

Derartige Führerstände sind häufig mit Schaltschränken ausgerüstet, deren Bauteilbestückung eine Fremdkühlung erforderlich macht.

Derartige Schaltschränke können auf verschiedene Weise mit Kühlluft versorgt werden. So sind Klimatisierungsanordnungen bekannt, bei denen die Schaltschränke im Führerstand oder dessen Nähe mit Abluft aus dem Führerstand oder Abluft aus einem der Fahrgasträume gekühlt werden. Dies hat aber zum einen den Nachteil, dass die Abluft häufig verunreinigt ist, wodurch die Schaltschränke, die durch die Abluft gekühlt werden, relativ schnell verschmutzen und somit die Bauteile im Schaltschrank in relativ kurzen Zeitabständen gereinigt werden müssen. Es ist auch bekannt, zur Luftreinigung Luftfilter einzusetzen, die dann aber ebenfalls in relativ kurzen Zeitabständen gewartet werden müssen.

Problematisch ist auch, da die zu reinigenden Bauteile im Schaltschrank zur besseren Erreichbarkeit teilweise vorderseitig in den Schaltschranktüren angeordnet werden, dass dies zu relativ hohen akustischen Emissionen führt, die in den jeweiligen Aufenthaltsraum, beispielsweise Führerstand, eindringen.

Außerdem haben die Schaltschränke im Falle der Kühlung durch Abluft eine direkte offene Schnittstelle, das heißt ein Lüftungsgitter, zum jeweiligen Aufenthaltsraum, beispielsweise Führerstand, was das Risiko birgt, dass im Brandfall eines Schaltschrankes Rauchgase in den besagten Aufenthaltsraum eindringen können.

Als ungünstig kann sich außerdem erweisen, dass (insbesondere in einer kalten Jahreszeit) die verwendete Abluft auf die Komfortbedürfnisse des Fahrzeugführers bzw. der Passagiere des Triebfahrzeuges reguliert ist und damit eine effektive Bauteil-Kühlung erschwert.

Eine Klimatisierungsanordnung, bei der eine forcierte Innenkühlung von Schaltschränken in einem Schienenfahrzeug über einen Ventilator im Schaltschrank erreicht wird, der Zu- oder Abluft aus dem Passagierbereich fördert und in Ausnahmefällen auch Umluft aus dem Passagierbereich verwendet, ist aus der EP 0 943 520 A1 bekannt.

Eine andere Klimatisierungsanordnung für einen Führerstand basiert auf dem Prinzip, wonach die Kühlung der Schaltschränke über eine separate Kühleinrichtung in den Schaltschränken mit einem geschlossenen Kühlkreis erreicht wird. Bei einer solchen Klimatisierungsanordnung benötigt allerdings jeder Schaltschrank eine eigene Kühleinrichtung, was zu einem hohen Aufwand bei Fertigung, Montage und Wartung führt.

Aus der DE 296 00 512 U1 ist ferner eine Klimatisierungsanordnung mit einer Kühleinrichtung in Form eines Heizungs- und Lüftungssystems für einen Führerstand eines Schienenfahrzeugs bekannt, bei dem sich das Klimagerät zur Regelung der Lufttemperatur im Dachbereich befindet und die behandelte Luft über einen Luftkanal eines Leitungssystems an die Bedarfsstellen innerhalb der Kabine geleitet wird.

Die EP 1 637 709 A2 beschreibt schließlich eine Vorrichtung zum Wärmeaustausch in Kraftfahrzeugen, mit der die Temperaturen der Fahrzeugkomponenten angehoben oder gesenkt werden können. Auch diese Vorrichtung verfügt über eine erste Kühleinrichtung zur Regelung der Temperatur in einem Passagierraum und eine zweite Kühleinrichtung zum Kühlen elektrischer Komponenten, wobei die erste Kühleinrichtung und die zweite Kühleinrichtung aber unabhängig voneinander, das heißt nicht in demselben Klimagerät, angeordnet sind.

Die aus dem Stand der Technik bekannten Klimatisierungsanordnungen sind alle relativ komplex aufgebaut.

Es ist die Aufgabe der vorliegenden Erfindung, eine Klimatisierungsanordnung für einen Aufenthaltsraum eines Schienenfahrzeugs zu schaffen, mit der neben der Regelung der Lufttemperatur im Aufenthaltsraum auch mit einfachen Mitteln die Kühlung mindestens eines Schaltschranks möglich ist.

Die zuvor hergeleitete und aufgezeigte Aufgabe wird gemäß einer ersten Lehre der vorliegende Erfindung gelöst durch eine Klimatisierungsanordnung für einen Aufenthaltsraum, insbesondere Führerstand oder Passagierraum, eines Schienenfahrzeugs, insbesondere Triebfahrzeugs, mit einem Klimagerät zur Regelung der Lufttemperatur im Aufenthaltsraum, mit einer ersten Kühleinrichtung, die in das Klimagerät integriert ist, mit einem ersten Leitungssystem, das mit der ersten Kühleinrichtung verbunden ist und das mindestens einen Luftkanal aufweist, der zum Aufenthaltsraum führt, mit mindestens einem Schaltschrank, mit einer zweiten Kühleinrichtung und mit einem zweiten Leitungssystem, das mit der zweiten Kühleinrichtung und mit dem mindestens einen Schaltschrank verbunden ist und das mindestens einen Kühlkreis aufweist, wobei die zweite Kühleinrichtung in das Klimagerät integriert ist, wobei der mindestens eine Kühlkreis einen inneren Kühlkreis, der die zweite Kühleinrichtung mit dem mindestens einen Schaltschrank verbindet, und einen äußeren Kühlkreis, der die zweite Kühleinrichtung mit einem Bereich außerhalb des Klimageräts verbindet, umfasst und wobei die zweite Kühleinrichtung einen Wärmetauscher aufweist, über den der äußere Kühlkreis mit dem inneren Kühlkreis thermisch verbunden ist, und wobei der innere Kühlkreis und/oder der äußere Kühlkreis luftdurchströmt ist.
Indem als Kühlmedium Luft verwendet wird, der jeweilige Kühlkreis also luftdurchströmt ist, kann der Aufbau des Kühlkreises gegenüber einem mit einer Flüssigkeit gefüllten Kühlkreis vereinfacht werden. In diesem Fall ist der Wärmetauscher vorzugsweise ein Luft-/Luft-Wärmetauscher, der insbesondere nach dem Kreuz-Gegenstromprinzip arbeitet. Dabei kann der äußere Kühlkreis mit Außenluft, das heißt Luft von außerhalb des Fahrzeugs, und/oder mit Abluft aus einem Passagierraum durchströmt sein. Die relativ kühle Außenluft kühlt dann über den Wärmetauscher die im hermetisch dichten Kühlkreis zirkulierende Luft. Das Einleiten von Außenluft und/oder Abluft aus einem Passagierraum in den äußeren Kühlkreis führt zu einer weiteren Vereinfachung der Klimatisierungsanordnung.

Erfindungsgemäß ist eine zweite Kühleinrichtung in das Klimagerät integriert, die mit dem mindestens einen Schaltschrank, der eine Baugruppe eines sicherheitsrelevanten Systems, z.B. Funk- oder Bremssystems, enthalten kann, über ein zweites Leitungssystem verbunden ist. So braucht die Klimatisierungsanordnung nur ein einziges Klimagerät aufweisen, welches beispielsweise an einer Stelle angeordnet werden kann, welche zu möglichst wenig akustischen Emissionen in dem Aufenthaltsraum führt und welche einfach, beispielsweise von außen und ohne den Aufenthaltsraum betreten zu müssen, zugänglich ist. Ein solches Klimagerät ist auch aufgrund der Integration zweier separater Kühleinrichtungen relativ kompakt aufgebaut und kann auf diese Weise entsprechend einfach gefertigt, montiert und gewartet werden. Grundsätzlich ist es bei der erfindungsgemäßen Klimatisierungsanordnung auch denkbar, mehrere Klimageräte des zuvor beschriebenen Typs vorzusehen. Dabei muss das Klimagerät bzw. bei mehreren Klimageräten eines der Klimageräte nicht zwingend an den zu klimatisierenden Aufenthaltsraum angrenzend angeordnet sein, sondern kann auch davon beabstandet sein. Soll beispielsweise der Führerstand klimatisiert werden, so braucht das Klimagerät nicht an diesen angrenzen, sondern kann auch an anderer Stelle angeordnet sein, durchaus auch am anderen Fahrzeugende.

Unterschiedliche Ausgestaltungen einer solchen Klimatisierungsanordnung sind Gegenstand der Unteransprüche und werden im Folgenden näher beschrieben.

Das erste Leitungssystem und das zweite Leitungssystem sind gemäß einer Ausgestaltung der erfindungsgemäßen Klimatisierungsanordnung voneinander unabhängig, das heißt mechanisch und thermisch voneinander getrennt. Zumindest besteht keine Fluidverbindung zwischen den beiden Leitungssystemen. So wird vermieden, dass verunreinigte Abluft, die beispielsweise durch das erste Leitungssystem geführt wird, das im zweiten Leitungssystem strömende Kühlmedium, welches Luft sein kann, ebenfalls verunreinigt. Grundsätzlich sind auch vorteilhafte Ausgestaltungen denkbar, bei denen zwischen dem ersten Leitungssystem und dem zweiten Leitungssystem eine Fluidverbindung besteht. Entsprechende Ausgestaltungen werden später noch gesondert beschrieben.

Gemäß einer weiteren Ausgestaltung der erfindungsgemäßen Klimatisierungsanordnung ist vorgesehen, dass das zweite Leitungssystem mit mindestens zwei Schaltschränken verbunden ist, vorzugsweise derart, dass der Kühlkreis in Strömungsrichtung vor den Schaltschränken geteilt ist, das heißt eine Gabelung aufweist. Mit anderen Worten wird in diesem Fall der Kühlmittelstrom, beispielsweise der Luftstrom, in einen ersten und in einen zweiten Teilstrom aufgeteilt, wobei dann der erste Teilstrom zu dem einen Schaltschrank und der zweite Teilstrom zu dem anderen Schaltschrank geführt werden kann. Selbstverständlich ist es auch denkbar, dass bei Vorhandensein von mehr als zwei Schaltschränken auch eine Aufteilung in eine entsprechend größere Anzahl von Teilströmen vorgesehen sein kann. Dadurch ist es möglich, mit nur einem Leitungssystem mehrere Schaltschränke optimal zu kühlen.

Gemäß wiederum einer weiteren Ausgestaltung der erfindungsgemäßen Klimatisierungsanordnung weist der mindestens eine Kühlkreis einen inneren Kühlkreis, der die zweite Kühleinrichtung mit dem mindestens einen Schaltschrank verbindet und hermetisch dicht geschlossen sein kann, und einen äußeren Kühlkreis auf, der die zweite Kühleinrichtung mit einem Bereich außerhalb des Klimageräts, insbesondere außerhalb des Schienenfahrzeugs, verbindet. Dabei ist es sinnvoll, wenn die zweite Kühleinrichtung einen Wärmetauscher aufweist, über den der äußere Kühlkreis mit dem inneren Kühlkreis thermisch verbunden ist. Über den Wärmetauscher kann eine Wärmeübertragung von dem inneren auf den äußeren Kühlkreis erfolgen. Wenn der innere Kühlkreis hermetisch dicht geschlossen ist, kann dieser auch nicht von der Luft des äußeren Kühlkreises oder der im ersten Leitungssystem strömenden Luft verunreinigt werden. Besonders bevorzugt sind auch der bzw. die Schaltschränke hermetisch dicht, so dass aus der Umgebung kein Schmutz in den inneren Kühlkreis eindringen kann.

Als besonders vorteilhaft erweist sich, dass im Falle einer Überhitzung oder eines Brandes von Komponenten im Schaltschrank keine Rauchgase unmittelbar über das Leitungssystem der Kühlkreise in den Aufenthaltsraum eindringen können.

Gemäß noch einer anderen Ausgestaltung der erfindungsgemäßen Klimatisierungsanordnung weist die erste Kühleinrichtung und/oder die zweite Kühleinrichtung mindestens einen Ventilator auf. Vorzugsweise ist der innere Kühlkreis mit einem Ventilator und/oder der äußere Kühlkreis mit einem Ventilator versehen. Durch die Ventilatoren kann die Strömung im jeweiligen Kühlkreis geregelt werden.

Wenn gemäß einer weiteren Ausgestaltung mindestens ein Temperatursensor, insbesondere ein Temperatursensor je Schaltschrank, vorgesehen ist, der vorzugsweise im mindestens einen Schaltschrank angeordnet ist, wird mit einfachen Mitteln eine Überwachung und/oder Steuerung des Klimageräts, insbesondere der zweiten Kühleinrichtung und der zugehörigen Ventilatoren, ermöglicht. Dabei kann eine Steuereinrichtung vorgesehen sein, die mindestens einen der Ventilatoren, vorzugsweise zumindest den mit dem inneren Kühlkreis verbundenen Ventilator, abhängig von einem vom mindestens einen Temperatursensor ermittelten Temperaturwert steuert. Eine Steuerung kann darin bestehen, dass der jeweilige Ventilator angeschaltet oder ausgeschaltet wird. Eine Steuerung kann aber auch in der Regulierung der Geschwindigkeit des Ventilators und damit der Strömungsgeschwindigkeit des Kühlmediums bestehen. Dadurch ist es möglich, bei Überschreiten eines definierten Temperaturgrenzwerts den äußeren Kühlkreis in Betrieb zu nehmen, um die Wärme der Schaltschränke an die Außenluft abzuführen. Eine Steuerung kann auch vorsehen, die Intensität der Kühlung auf die Nichtüberschreitung eines definierten Temperaturgrenzwertes hin zu regeln. Der innere Kühlkreis wird also energieoptimal temperaturabhängig gesteuert.

Das Klimagerät kann gemäß noch einer weiteren Ausgestaltung über dem Aufenthaltsraum und/oder auf dem Dach des Schienenfahrzeugs angeordnet sein, wobei das Klimagerät vorzugsweise auf dem Dach montiert oder, wenn in das Dach des Schienenfahrzeugs integriert, eine von der Außenseite des Schienenfahrzeugs zugängliche Revisionsöffnung aufweist, die beispielsweise über eine Klappe verschließbar ist. Dadurch sind die Geräuschemissionen in den Aufenthaltsraum deutlich reduziert und die Wartung insbesondere des Wärmetauschers kann von außen direkt über die Revisionsöffnung erfolgen, wodurch eine aufwändige Demontage im Schaltschrank bzw. Aufenthaltsraum entfällt und eine Verschmutzung des Aufenthaltsraums vermieden wird.

Gemäß noch einer weiteren Ausgestaltung der erfindungsgemäßen Klimatisierungsanordnung ist der mindestens eine Schaltschrank zwischen einem Passagierraum und einem Führerstand, insbesondere in einem Elektronikraum, der vorzugsweise mittels einer Brandschutzwand vom Führerstand getrennt ist, oder in einem Führerstand, vorzugsweise an der Rückwand oder im Bedienpult des Führerstandes, angeordnet. Bei dem Führerstand handelt es sich vorzugsweise um den zu klimatisierenden Aufenthaltsraum. Auf diese Weise werden möglichst kurze Strecken zur funktionellen Verbindung zwischen dem jeweiligen Schaltschrank und den damit betriebenen Komponenten erreicht und dennoch aufgrund der zuvor beschriebenen Klimatisierungsanordnung ermöglicht, dass der bzw. die Schaltschränke optimal gekühlt werden können, ohne dass diese wie im Stand der Technik relativ schnell verschmutzen und ohne dass im Falle eines Schaltschrankbrandes Rauchgase in den Führerraum eindringen können. Der mindestens eine Schaltschrank muss aber nicht zwingend an den zu klimatisierenden Führerstand angrenzend oder in dem zu klimatisierenden Führerstand angeordnet sein, sondern kann auch davon beabstandet sein und insbesondere auch in einem anderen Führerstand bzw. anderen Elektronikraum, beispielsweise am anderen Fahrzeugende, angeordnet sein.

Im Folgenden werden nun einige Ausgestaltungen beschrieben, bei denen zwischen dem ersten Leitungssystem und dem zweiten Leitungssystem eine Fluidverbindung besteht, um im Bedarfsfall zur weiteren Optimierung der Kühlung der Schaltschränke auch die relativ niedrigen Temperaturen der Abluft und/oder Zuluft des Aufenthaltsraums nutzbar machen zu können. So ist es denkbar, dass in bestimmten geografischen Regionen oder in bestimmten Jahreszeiten die Umgebungstemperatur, das heißt die Außentemperatur außerhalb des Schienenfahrzeugs, so hoch ist, dass die von außen in den äußeren Kühlkreis eingeleitete Luft keine ausreichende Kühlung des Fluids bzw. der Luft im inneren Kühlkreis gewährleistet und dadurch letztlich der mindestens eine Schaltschrank nicht optimal gekühlt werden kann. Um dem vorzubeugen, sind in den folgenden Ausgestaltungen verschiedene Fluidverbindungen, insbesondere realisiert durch einen entsprechenden Luftkanal, beschrieben, über die die relativ niedrigen Temperaturen im ersten Leitungssystem, welches zur Kühlung des Aufenthaltsraums dient, auch dazu genutzt werden können, das Fluid, beispielsweise die Luft, im inneren Kühlkreis des zweiten Leitungssystems direkt oder indirekt weiter herunterzukühlen. Dabei können diese Fluidverbindungen durch Vorsehen entsprechender Ventile so ausgestaltet sein, dass sie in einer bestimmten Betriebsperiode des Schienenfahrzeugs, beispielsweise im Winter, unterbrochen sind (der zugehörige Luftkanal ist geschlossen) und in einer anderen Betriebsperiode des Schienenfahrzeugs, beispielsweise im Sommer, freigegeben sind (der zugehörige Luftkanal ist geöffnet). Es sei auch hervorgehoben, dass die folgenden Ausgestaltungen und Varianten auch kombiniert werden können, das heißt mehrere der beschriebenen Fluidverbindungen gleichzeitig realisiert sein können.

Gemäß einer Ausgestaltung besteht zwischen einem verbrauchte Luft aus dem Aufenthaltsraum ableitenden Luftkanal, insbesondere einem verbrauchte Luft aus dem Aufenthaltsraum in einen Bereich außerhalb des Klimageräts, vorzugsweise außerhalb des Schienenfahrzeugs, ableitenden Luftkanal, und dem zweiten Leitungssystem eine Fluidverbindung.

Gemäß einer ersten Variante ist dabei vorgesehen, dass zwischen dem verbrauchte Luft aus dem Aufenthaltsraum ableitenden Luftkanal, insbesondere dem verbrauchte Luft aus dem Aufenthaltsraum in den Bereich außerhalb des Klimageräts ableitenden Luftkanal, und dem äußeren Kühlkreis eine Fluidverbindung besteht, die von einem Luftkanal gebildet wird, der vorzugsweise mittels eines Ventils geöffnet und geschlossen werden kann. Dabei kann der äußere Kühlkreis in Strömungsrichtung vor dem Luftkanal mittels eines Ventils geöffnet und geschlossen werden.

Gemäß einer anderen Variante ist vorgesehen, dass zwischen dem verbrauchte Luft aus dem Aufenthaltsraum ableitenden Luftkanal, insbesondere dem verbrauchte Luft aus dem Aufenthaltsraum in den Bereich außerhalb des Klimageräts ableitenden Luftkanal, und dem inneren Kühlkreis eine Fluidverbindung besteht, die von einem Luftkanal gebildet wird, der vorzugsweise mittels eines Ventils geöffnet und geschlossen werden kann. Dabei kann der Luftkanal in den mindestens einen Schaltschrank führen. Insbesondere ist der Luftkanal mit mindestens zwei Schaltschränken verbunden, vorzugsweise derart, dass der Luftkanal in Strömungsrichtung vor den Schaltschränken geteilt ist. Dabei ist es denkbar, dass ein weiterer Luftkanal vom inneren Kühlkreis abzweigt und in den Bereich außerhalb des Klimageräts, insbesondere außerhalb des Schienenfahrzeugs, führt, wobei vorzugsweise der weitere Luftkanal mittels eines Ventils geöffnet und geschlossen werden kann.

Bei beiden vorangehenden Varianten ist es denkbar, dass der die verbrauchte Luft aus dem Aufenthaltsraum in den Bereich außerhalb des Klimageräts ableitende Luftkanal in Strömungsrichtung hinter dem Luftkanal mittels eines Ventils geöffnet und geschlossen werden kann.

Bei der zuvor beschriebenen Ausgestaltung und seinen beiden Varianten wurde die Abluft des ersten Leitungssystems zur Kühlung des Fluids, beispielsweise der Luft, im zweiten Leitungssystem genutzt. Bei der nun folgenden weiteren Ausgestaltung erfolgt eine Nutzung der Zuluft des ersten Leitungssystems, also der Luft, die dem Aufenthaltsraum zugeführt wird.

So besteht gemäß dieser weiteren Ausgestaltung zwischen einem dem Aufenthaltsraum frische Luft zuführenden Luftkanal, insbesondere einem dem Aufenthaltsraum zuvor abgeleitete und recycelte Luft zuführenden Luftkanal, und dem zweiten Leitungssystem eine Fluidverbindung.

Gemäß einer ersten Variante ist dabei vorgesehen, dass zwischen dem dem Aufenthaltsraum frische Luft zuführenden Luftkanal, insbesondere dem dem Aufenthaltsraum zuvor abgeleitete und recycelte Luft zuführenden Luftkanal, und dem äußeren Kühlkreis eine Fluidverbindung besteht, die von einem Luftkanal gebildet wird, der vorzugsweise mittels eines Ventils geöffnet und geschlossen werden kann. Dabei ist es denkbar, dass der äußere Kühlkreis in Strömungsrichtung vor dem Luftkanal mittels eines Ventils geöffnet und geschlossen werden kann und/oder ein verbrauchte Luft aus dem Aufenthaltsraum ableitender Luftkanal, insbesondere ein verbrauchter Luft aus dem Aufenthaltsraum in einen Bereich außerhalb des Klimageräts ableitender Luftkanal, mittels eines Ventils geöffnet und geschlossen werden kann.

Gemäß einer weiteren Variante ist vorgesehen, dass zwischen dem dem Aufenthaltsraum frische Luft zuführenden Luftkanal, insbesondere dem Aufenthaltsraum zuvor abgeleitete und recycelte Luft zuführenden Luftkanal, und dem inneren Kühlkreis eine Fluidverbindung besteht, die von einem Luftkanal gebildet wird, die vorzugsweise mittels eines Ventils geöffnet und geschlossen werden kann. Dabei ist es denkbar, dass der Luftkanal in den mindestens einen Schaltschrank führt. Insbesondere ist der Luftkanal mit mindestens zwei Schaltschränken verbunden, vorzugsweise derart, dass der Luftkanal in Strömungsrichtung vor den Schaltschränken geteilt ist. Dabei ist es weiter denkbar, dass ein weiterer Luftkanal vom inneren Kühlkreis abzweigt und in einen Bereich außerhalb des Klimageräts, insbesondere außerhalb des Schienenfahrzeugs, führt, wobei vorzugsweise der weitere Luftkanal mittels eines Ventils geöffnet und geschlossen werden kann.

Bei allen vorangehend beschriebenen Ausgestaltungen erfolgt der Wärmeaustausch zwischen äußerem Kühlkreis und innerem Kühlkreis vorzugsweise über einen Wärmetauscher, über den der äußere Kühlkreis mit dem inneren Kühlkreis thermisch verbunden ist. In diesem Fall besteht dann üblicherweise zwischen dem inneren Kühlkreis und dem äußeren Kühlkreis keine Fluidverbindung. Es ist aber auch der Fall denkbar, dass eine Fluidverbindung zwischen innerem Kühlkreis und äußerem Kühlkreis besteht. Eine solche Fluidverbindung, die ebenfalls mittels eines entsprechenden Luftkanals realisiert sein kann, kann dazu dienen, beim Defekt eines Ventilators im inneren Kühlkreis das durch den äußeren Kühlkreis strömende Fluid, beispielsweise Luft, unmittelbar in den inneren Kühlkreis zu leiten, um dadurch trotz eines unvorhergesehenen Defekts eine ausreichende Kühlung des mindestens einen Schaltschranks zu gewährleisten. Dabei kann auch in diesem Fall die Fluidverbindung zwischen innerem und äußerem Kühlkreis im Normalfall getrennt bzw. der entsprechende Luftkanal geschlossen sein, wohingegen nur im Bedarfsfall (Notfallprogramm) die Fluidverbindung freigegeben bzw. der Luftkanal geöffnet wird, was beides durch ein dem Luftkanal zugeordnetes Ventil bewerkstelligt werden kann.

Erreicht wird dies gemäß einer Ausgestaltung der erfindungsgemäßen Klimatisierungsanordnung, dadurch dass zwischen dem inneren und dem äußeren Kühlkreis eine Fluidverbindung besteht, die von einem Luftkanal gebildet wird, der in Strömungsrichtung vor dem mindestens einen Schaltschrank mit dem inneren Kühlkreis verbunden ist und der vorzugsweise mittels eines Ventils geöffnet und geschlossen werden kann. Ein weiterer Luftkanal kann vom inneren Kühlkreis abzweigen und in einen Bereich außerhalb des Klimageräts, insbesondere außerhalb des Schienenfahrzeugs, führen, wobei vorzugsweise dieser weitere Luftkanal mittels eines Ventils geöffnet und geschlossen werden kann. Dabei ist es denkbar, dass der innere Kühlkreis in Strömungsrichtung hinter dem weiteren Luftkanal mittels eines Ventils geöffnet und geschlossen werden kann und/oder der äußere Kühlkreis in Strömungsrichtung hinter dem Luftkanal, der die Fluidverbindung zu dem inneren Kühlkreis bildet, mittels eines Ventils geöffnet und geschlossen werden kann.

Ferner kann die bereits in Zusammenhang mit den Ventilatoren beschriebene Steuereinrichtung auch so ausgebildet sein, dass sie mindestens eines der zuvor beschriebenen Ventile abhängig von einem vom mindestens einen Temperatursensor ermittelten Temperaturwert steuert. Die Steuerung kann darin bestehen, die zuvor beschriebenen Ventile im Bedarfsfall automatisch zu öffnen oder zu schließen, wodurch der zugehörige Luftkanal geöffnet und geschlossen werden kann. Auf diese Weise kann die Kühlung der Schaltschränke, insbesondere auch jahreszeitabhängig, noch weiter optimiert werden.

Schließlich kann gemäß noch einer weiteren Ausgestaltung vorgesehen sein, dass die erste Kühleinrichtung über das Bordnetz, beispielsweise 400 V-Bordnetz, des Schienenfahrzeugs und die zweite Kühleinrichtung über eine Batterie (Akku), beispielsweise 110 V-Batterie, mit Spannung versorgt wird. Letztere ist unabhängig vom Bordnetz, so dass der mindestens eine Schaltschrank, der wie gesagt eine Baugruppe eines sicherheitsrelevanten Systems enthalten kann, auch bei Ausfall des Bordnetzes noch gekühlt werden kann, so dass die sicherheitsrelevanten Systeme, z.B. Funk- und/oder Bremssysteme, auch in einer Notsituation (Brandfall) noch für eine vorgegebene Zeit sicher funktionieren.

Die Aufgabe wird ferner gemäß einer zweiten Lehre der vorliegenden Erfindung gelöst durch ein Schienenfahrzeug mit einer Klimatisierungsanordnung, wie sie zuvor beschrieben wurde.

Es gibt nun eine Vielzahl von Möglichkeiten, die erfindungsgemäße Klimatisierungsanordnung und das erfindungsgemäße Schienenfahrzeug auszugestalten und weiterzubilden. Hierzu sei einerseits verwiesen auf die dem Patentanspruch 1 nachgeordneten Patentansprüche, andererseits auf die Beschreibung mehrerer Ausführungsbeispiele in Verbindung mit der Zeichnung. In der Zeichnung zeigt:
- Fig. 1: ein erstes Ausführungsbeispiel einer Klimatisierungsanordnung,
- Fig. 2a) und b): ein zweites Ausführungsbeispiel einer Klimatisierungsanordnung,
- Fig. 3a) und b): ein drittes Ausführungsbeispiel einer Klimatisierungsanordnung,
- Fig. 4a) und b): ein viertes Ausführungsbeispiel einer Klimatisierungsanordnung,
- Fig. 5a) und b): ein fünftes Ausführungsbeispiel einer Klimatisierungsanordnung und
- Fig. 6a) und b): ein sechstes Ausführungsbeispiel einer Klimatisierungsanordnung.

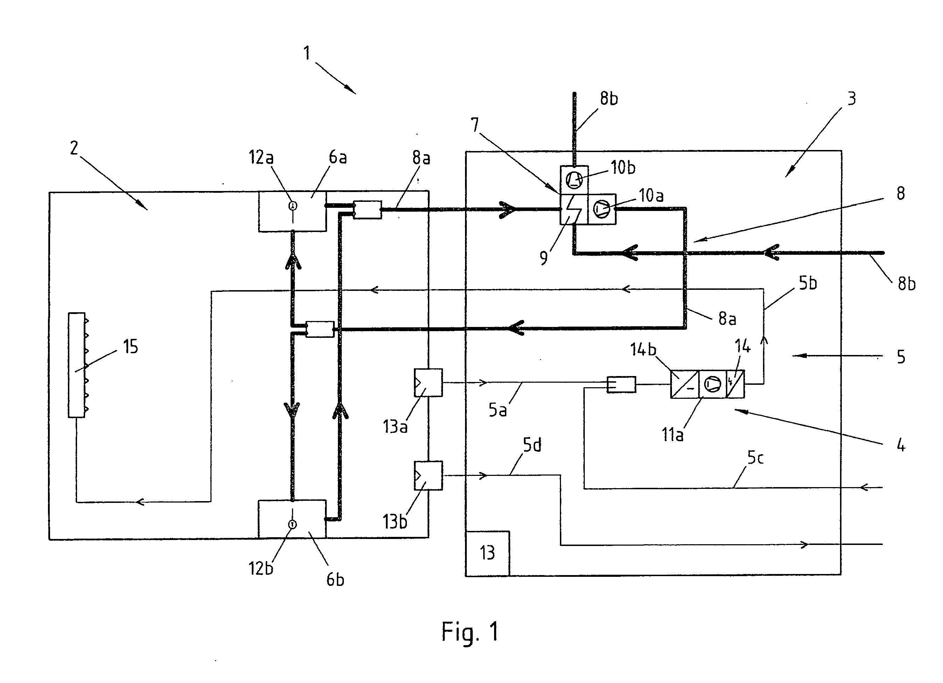

In der Zeichnung zeigt Fig. 1 schematisch den Aufbau eines Ausführungsbeispiels einer Klimatisierungsanordnung 1 für einen Aufenthaltsraum 2 eines Schienenfahrzeugs (nicht dargestellt). Bei dem Aufenthaltsraum 2 kann es sich um einen Führerstand oder einen Passagierraum handeln.

Die Klimatisierungsanordnung 1 weist ein Klimagerät 3 zur Regelung der Lufttemperatur im Aufenthaltsraum 2 auf. Mit Hilfe des Klimageräts 3 kann die Luft beheizt oder gekühlt werden. Aus Gründen der Übersichtlichkeit wurde das Klimagerät 3 in der schematischen Ansicht in Fig. 1 neben dem Aufenthaltsraum 2 dargestellt, obwohl das Klimagerät 3 auch an anderer Stelle, beispielsweise auf dem oder integriert im Dach des Schienenfahrzeugs oder am anderen Fahrzeugende, angeordnet sein kann.

Die Klimatisierungsanordnung 3 weist eine erste Kühleinrichtung 4, mit der nicht nur gekühlt, sondern auch geheizt werden kann, auf, die in das Klimagerät 3 integriert ist. Im Sinne der vorliegenden Erfindung muss die Funktion einer Kühleinrichtung also nicht zwingend auf das Kühlen beschränkt sein, sondern kann auch das Heizen umfassen. Ferner ist ein erstes Leitungssystem 5 vorgesehen, das mit der ersten Kühleinrichtung 4 verbunden ist und das vier Luftkanäle aufweist, die - direkt oder indirekt - zum Aufenthaltsraum 2 führen. So ist ein Luftkanal 5a vorgesehen, dessen eines Ende zum Aufenthaltsraum führt und dessen anderes Ende zur ersten Kühleinrichtung 4 führt. Über den Luftkanal 5a kann verbrauchte Luft aus dem Aufenthaltsraum 2 über einen Einlass 13a abgesaugt werden. Die Luft wird dann über einen Ventilator 11a einer Heizeinrichtung 14 und einem Luftkühler 14b (z.B. einem Kältemittelverdampfer, dessen zugehöriger Kältemittel- und Rückkühlungskreislauf hier nicht weiter dargestellt ist) zugeführt, über welche sie bedarfsweise aufgeheizt oder gekühlt werden kann, um anschließend über einen weiteren Luftkanal 5b wieder in den Aufenthaltsraum 2 geleitet zu werden. Die Luft wird im Aufenthaltsraum 2 über Einströmdüsen 15 verteilt. Über einen weiteren Luftkanal 5c kann außerdem Außenluft zugeführt werden. Schließlich ist noch ein Luftkanal 5d vorgesehen, dessen eines Ende ebenfalls zum Aufenthaltsraum 2 führt und dessen anderes Ende aus dem Schienenfahrzeug nach außen führt. Über den Luftkanal 5d kann verbrauchte Luft durch einen Einlass 13b aus dem Aufenthaltsraum 2 nach außen abgeleitet werden. Da dieser Luftkanal 5d durch das Klimagerät 3 geführt wird, kann in diesem Fall auf eine separate Abluftführung zur Außenseite des Schienenfahrzeugs einschließlich gesonderter Ablufthaube oder -gitter verzichtet werden.

Im Aufenthaltsraum 2 sind ferner zwei separate Schaltschränke 6a und 6b angeordnet. Die hier gezeigte Anordnung der Schaltschränke im Innern des Aufentzaltsraums 2 ist hier nur beispielhaft, da diese auch an anderer Stelle angeordnet werden können und insbesondere nicht zwingend in dem zu klimatisierenden Raum 2 aufgestellt sein müssen. Die Schaltschränke werden wie folgt gekühlt.

So ist eine zweite Kühleinrichtung 7 und ein zweites Leitungssystem 8 vorgesehen, dass mit der zweiten Kühleinrichtung 7 und den beiden Schaltschränken 6a und 6b verbunden ist und das zwei Kühlkreise 8a und 8b aufweist. Die zweite Kühleinrichtung 7 ist in das Klimagerät 3 integriert. Ferner ist das erste Leitungssystem 5 vom zweiten Leitungssystem 8 getrennt.

Das zweite Leitungssystem 8 ist mit den beiden Schaltschränken 6a und 6b derart verbunden, dass der Kühlkreis 8a, bei dem es sich um einen hermetisch dicht geschlossenen inneren Kühlkreis handelt, in Strömungsrichtung vor den Schaltschränken 6a und 6b geteilt ist. Ein Teilstrom strömt dann durch den Schaltschrank 6a und der zweite Teilstrom durch den Schaltschrank 6b. Hinter den Schaltschränken 6a und 6b werden die beiden Teilströme wieder im Kühlkreis 8a zusammengeführt. Dort, wo der Kühlkreis 8a geteilt und/oder wieder zusammengeführt wird, können Strömungsdrossel- oder Leiteinrichtungen vorgesehen sein, mit denen dauerhaft oder (wenn die Drossel- oder Leiteinrichtungen betriebsmäßig stellbar ausgebildet und in die Steuerung der zweiten Kühleinrichtung einbezogen sind) bedarfsangepasst eine unterschiedliche Strömungsverteilung zwischen den Schaltschränken 6a und 6b einstellbar ist.

Ferner ist ein äußerer Kühlkreis 8b, der mit der Außenluft außerhalb des Fahrzeugs in Verbindung steht, vorgesehen. Über einen Luft/Luft-Wärmetauscher 9 ist der äußere Kühlkreis 8b mit dem inneren hermetisch dichten Kühlkreis 8a thermisch verbunden. Wärme im Kühlkreis 8a kann über den Wärmetauscher 9 an den Kühlkreis 8b abgeführt werden, ohne dass der Kühlkreis 8b oder einer der Luftkanäle des ersten Leitungssystems 5 die Luft, die durch die Schaltschränke 6a und 6b strömt, verunreinigen könnte.

Im Schaltschrank 6a ist ein erster Temperatursensor 12a und im Schaltschrank 6b ein zweiter Temperatursensor 12b vorgesehen, die - im vorliegenden Fall drahtlos - mit einer Steuereinrichtung 13 verbunden sind. Die Steuereinrichtung 13 regelt - hier ebenfalls drahtlos - den Ventilator 10a des inneren Kühlkreises 8a und den Ventilator 10b des äußeren Kühlkreises 8b abhängig von den jeweils ermittelten Temperaturwerten.

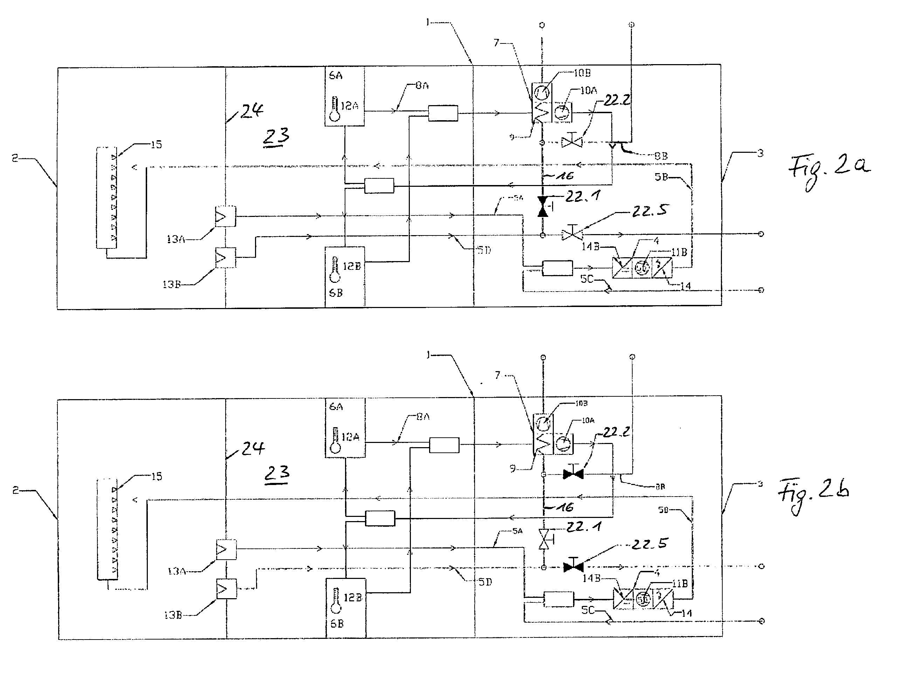

Die anhand der Figuren 2a) bis 6b) beschriebenen Ausführungsbeispiele sind grundsätzlich ähnlich wie das Ausführungsbeispiel von Fig. 1 aufgebaut, wobei jedoch die Schaltschränke 6a und 6b nicht innerhalb des Aufenthaltsraums 2 angeordnet sind, sondern in einem separaten Elektronikraum 23, der von dem Aufenthaltsraum 2 durch eine Brandschutzwand 24 getrennt ist. Auf der anderen Seite des Elektronikraums 23 schließt sich dann das Klimagerät 3 an, wobei die aus dem Klimagerät 3 sich nach außen erstreckenden Luftkanäle 5c und 5d in einen benachbarten Fahrgastraum oder die Umgebung des Schienenfahrzeugs münden können. Dasselbe gilt auch für die sich aus dem Klimagerät 3 nach außen erstreckenden Leitungen 8b, 18, 18' und 18", die ebenfalls sowohl in einen Fahrgastraum als auch in die Umgebung münden können. Entsprechendes gilt selbstverständlich auch für die sich aus dem Klimagerät 3 nach außen erstreckenden Leitungen und Kanäle in Fig. 1.

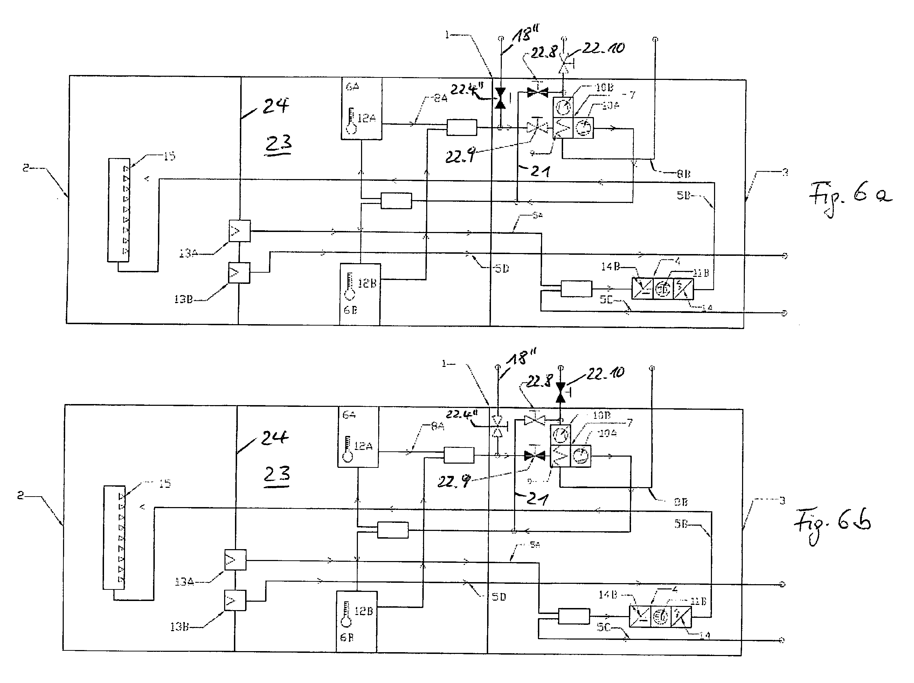

Weiterhin unterscheiden sich die Ausführungsbeispiele in den Figuren 2a) bis 6b) von dem Ausführungsbeispiel in Fig. 1 dadurch, dass die im Folgenden beschriebenen Ausführungsbeispiele jeweils um eine zusätzliche Fluidverbindung verfügen, nämlich in den Fällen der Figuren 2a) bis 5b) eine das erste Leitungssystem mit dem zweiten Leitungssystem verbindende Fluidverbindung und im Falle der Figuren 6a) und b) eine den inneren Kühlkreis mit dem äußeren Kühlkreis verbindende Fluidverbindung. Dabei zeigen die Figuren 2a), 3a), 4a), 5a) und 6a) jeweils den Fall, bei dem mittels geeigneter Schaltung der Ventile eine "normale" Funktionsweise der Klimatisierungsanordnung erreicht wird, die der anhand von Fig. 1 beschriebenen entspricht, wohingegen die Figuren 2b), 3b), 4b), 5b) und 6b) jeweils den Fall zeigen, bei dem die zusätzliche Fluidverbindung aktiviert (freigegeben) ist, um dadurch eine zusätzliche Kühlung zu erreichen.

In den Figuren 2a) und b) ist eine Klimatisierungsanordnung 1 dargestellt, bei der der Aufenthaltsraum 2 ein Führerstand ist und zwischen dem verbrauchte Luft aus dem Führerstand ableitenden Luftkanal 5d, hier dem verbrauchte Luft aus dem Führerstand in den Bereich außerhalb des Klimageräts 3 ableitenden Luftkanal, und dem äußeren Kühlkreis eine Fluidverbindung besteht, die von einem Luftkanal 16 gebildet wird, der mittels eines Ventils 22.1 geöffnet (Fig. 2b) und geschlossen (Fig. 2a) werden kann. Dabei kann der äußere Kühlkreis 8b in Strömungsrichtung vor dem Luftkanal 16 mittels eines Ventils 22.2 geöffnet (Fig. 2a) und geschlossen (Fig. 2b) werden. Auch gleichzeitig mit dem äußeren Kühlkreis 8b kann der die verbrauchte Luft aus dem Führerstand in den Bereich außerhalb des Klimageräts 3 ableitende Luftkanal 5d in Strömungsrichtung hinter dem Luftkanal 17 mittels eines Ventils 22.5 geöffnet (Fig. 2a) und geschlossen (Fig. 2b) werden.

Bei relativ niedrigen Außentemperaturen kann also das Ventil 22.1 geschlossen und die Ventile 22.2 und 22.5 geöffnet sein ("Wintermodus"). Bei relativ hohen Außentemperaturen kann für eine zusätzliche Kühlung das Ventil 22.1 geöffnet und die Ventile 22.2 und 22.5 geschlossen sein ("Sommermodus").

Ein Vorteil ist auch, dass im Sommer die aus dem Aufenthaltsraum abgeleitete Luft verwendet werden kann, um den geschlossenen Kühlkreis 8a abzukühlen, und zwar ohne dass dabei die Klimatisierung im Aufenthaltsraum dadurch beeinflusst würde. Wenn die Klimatisierungsanordnung im "Sommermodus" arbeitet und der Ventilator 10b ausfällt, reicht auch der Überdruck im Aufenthaltsraum im Vergleich zur Umgebung aus, in jedem Fall eine minimale Strömung beizubehalten, die für eine ausreichende Kühlung des geschlossenen Kreislaufs 8a ausreicht.

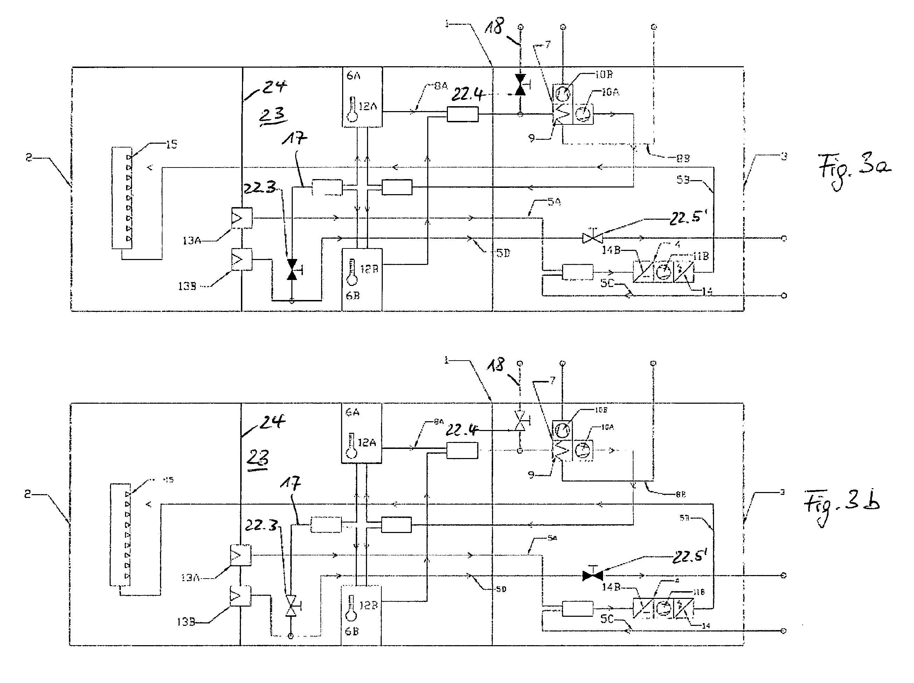

Die Figuren 3a) und b) zeigen eine Klimatisierungsanordnung 1, bei der zwischen dem verbrauchte Luft aus dem Führerstand 2 in den Bereich außerhalb des Klimageräts 3 ableitenden Luftkanal 5d und dem inneren Kühlkreis 8a eine Fluidverbindung besteht, die von einem Luftkanal 17 gebildet wird, der mittels eines Ventils 22.3 geöffnet (Fig. 3b) und geschlossen (Fig. 3a) werden kann. Der Luftkanal 17 ist dabei mit den beiden Schaltschränken 6a und 6b verbunden, und zwar derart, dass der Luftkanal 17 in Strömungsrichtung vor den Schaltschränken 6a und 6b geteilt ist. In den Schaltschränken 6a und 6b wird das über den Luftkanal 17 vom Luftkanal 5d abgezweigte Fluid in den inneren Kühlkreis 8a geleitet, wenn das Ventil 22.3 geöffnet ist. Ein weiterer Luftkanal 18 zweigt vom inneren Kühlkreis 8a ab und führt in den Bereich außerhalb des Schienenfahrzeugs bzw. außerhalb des Klimageräts 3, wobei der weitere Luftkanal 18 mittels eines Ventils 22.4 geöffnet (Fig. 3b) und geschlossen (Fig. 3a) werden kann. Auch hier kann gleichzeitig der die verbrauchte Luft aus dem Führerstand 2 in den Bereich außerhalb des Klimageräts 3 ableitende Luftkanal 5d in Strömungsrichtung hinter den Luftkanal 17 mittels eines Ventils 22.5' geöffnet (Fig. 3a) und geschlossen (Fig. 3b) werden.

Bei relativ kalten Umgebungstemperaturen können also die Ventile 22.3 und 22.4 geschlossen und das Ventil 22.5' geöffnet sein. Bei relativ warmen Umgebungstemperaturen können zur Verbesserung der Kühlung die Ventile 22.3 und 22.4 geöffnet und das Ventil 22.5' geschlossen werden.

Ein Vorteil ist auch hier, dass im Sommer die aus dem Aufenthaltsraum abgeleitete Luft verwendet werden kann, um den geschlossenen Kühlkreis 8a abzukühlen, ohne dass dabei die Klimatisierung im Aufenthaltsraum dadurch beeinflusst würde. Außerdem wird der thermische Wirkungsgrad dadurch erhöht, dass die aus dem Aufenthaltsraum kommende gekühlte Luft direkt in die Schaltschränke geleitet wird, weil dadurch kein zusätzlicher Wärmetauscher, z.B. Luft/Luft-Wärmetauscher, und damit keine zusätzlichen Energieverluste vorhanden sind. Wenn das System im "Sommermodus" ist, hat ein Ausfall des Ventilators 10b keine Auswirkungen auf die Klimatisierungsanordnung, die Strömung ist allein durch den Überdruck im Aufenthaltsraum gewährleistet.

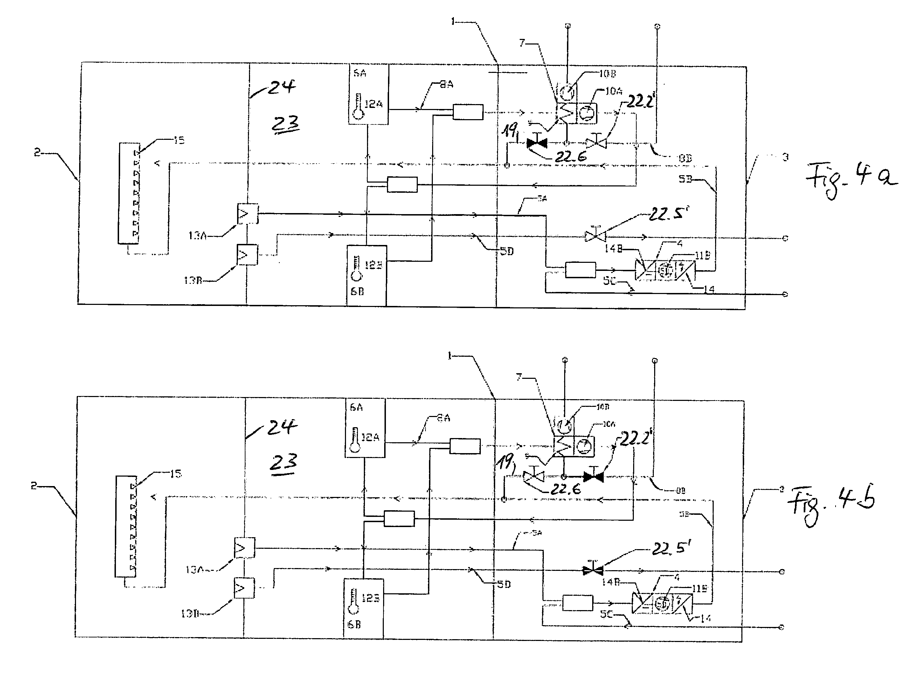

Die Figuren 4a) und b) zeigen eine Klimatisierungsanordnung 1, bei der zwischen dem dem Führerstand 2 frische Luft zuführenden Luftkanal 5b, hier dem dem Führerstand 2 zuvor abgeleitete und recycelte Luft zuführenden Luftkanal 5b, und dem äußeren Kühlkreis 8b eine Fluidverbindung besteht, die von einem Luftkanal 19 gebildet wird, der mittels eines Ventils 22.6 geöffnet (Fig. 4b) und geschlossen (Fig. 4a) werden kann. Dabei ist vorgesehen, dass der äußere Kühlkreis 8b in Strömungsrichtung vor dem Luftkanal 19 mittels eines Ventils 22.2' geöffnet (Fig. 4a) und geschlossen (Fig. 4b) werden kann und ein verbrauchte Luft aus dem Führerstand 2 ableitender Luftkanal 5d, hier ein verbrauchter Luft aus dem Führerstand 2 in einen Bereich außerhalb des Klimageräts 3 ableitender Luftkanal 5d, mittels eines Ventils 22.5" geöffnet (Fig. 4a) und geschlossen (Fig. 4b) werden kann.

Bei relativ niedrigen Außentemperaturen kann das Ventil 22.6 geschlossen und die Ventile 22.2' und 22.5" geöffnet werden. Bei relativ hohen Außentemperaturen kann das Ventil 22.6 geöffnet und die Ventile 22.2' und 22.5" geschlossen werden.

Ein Vorteil ist auch, dass im Sommer frische Luft, die vom ersten Leitungssystem 5 kommt, direkt dem Wärmetauscher, z.B. Luft/Luft-Wärmetauscher, zugeführt wird, wodurch der thermische Wirkungsgrad gesteigert wird. Befindet sich die Klimatisierungsanordnung im "Sommermodus", hat ein Ausfall des Ventilators 10b keine Auswirkungen auf das System und eine ausreichende Strömung bleibt garantiert durch den Druck im Luftkanal 5b.

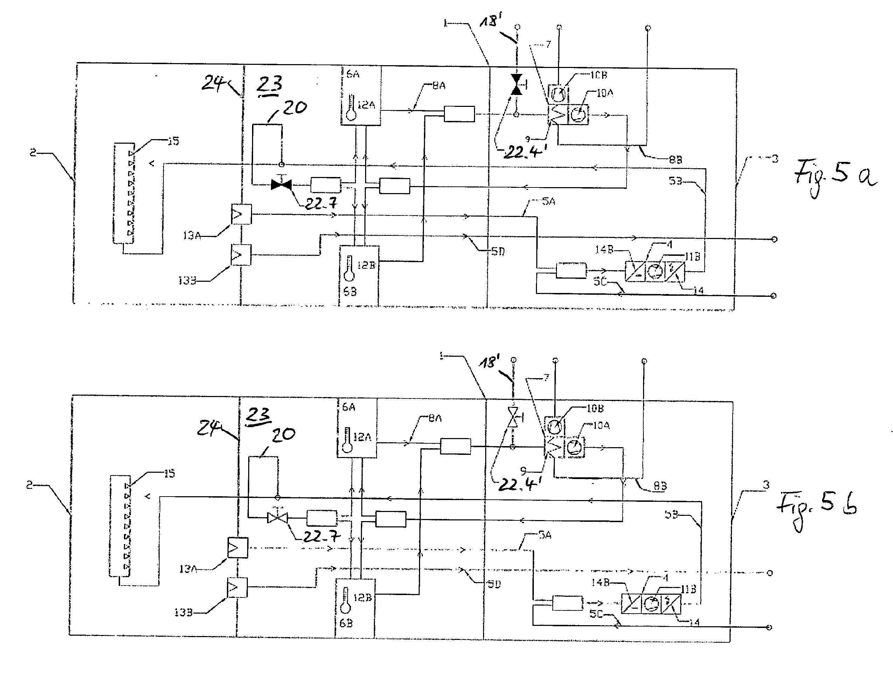

In Fig. 5a) und b) ist eine Klimatisierungsanordnung 1 dargestellt, bei der zwischen dem dem Führerstand 2 frische Luft zuführenden Luftkanal 5b, hier dem Führerstand 2 zuvor abgeleitete und recycelte Luft zuführenden Luftkanal 5b, und dem inneren Kühlkreis 8a eine Fluidverbindung besteht, die von einem Luftkanal 20 gebildet wird, die mittels eines Ventils 22.7 geöffnet (Fig. 5b) und geschlossen (Fig. 5a) werden kann. Ähnlich wie bei den Figuren 3a) und b) ist auch hier der Luftkanal 20 mit den beiden Schaltschränken 6a und 6b verbunden, und zwar derart, dass der Luftkanal 20 in Strömungsrichtung vor den Schaltschränken 6a und 6b geteilt ist. Das vom Luftkanal 5b abgezweigte Fluid wird über die Schaltschränke 6a und 6b dem inneren Kühlkreis 8a zugeführt, wenn das Ventil 22.7 geöffnet ist. Ein weiterer Luftkanal 18' ist vom inneren Kühlkreis 8a abgezweigt und führt in einen Bereich außerhalb des Schienenfahrzeugs bzw. außerhalb des Klimageräts 3, wobei der weitere Luftkanal 18' mittels eines Ventils 22.4' geöffnet (Fig. 5b) und geschlossen (Fig. 5a) werden kann.

Bei relativ niedrigen Außentemperaturen können die Ventile 22.7 und 22.4' geschlossen sein, wohingegen bei relativ hohen Außentemperaturen beide Ventile geöffnet werden können.

Ein Vorteil ist auch, dass im Sommer frische Luft aus dem ersten Leitungssystem 5 den Schaltschränken direkt zugeführt werden kann, wodurch der thermische Wirkungsgrad erhöht wird. Mit dieser Lösung wird eine maximale Verbesserung im thermischen Wirkungsgrad erreicht. Wenn die Klimatisierungsanordnung im "Sommermodus" ist, hat auch hier ein Ausfall des Ventilators 10b keine Auswirkungen auf das System und eine ausreichende Strömung wird durch den Druck im Luftkanal 5b garantiert.

Bei dem Ausführungsbeispiel in den Figuren 6a) und b) besteht keine Fluidverbindung zwischen dem ersten Leitungssystem 5 und dem zweiten Leitungssystem 8, wohl aber zwischen dem inneren Kühlkreis 8a und dem äußeren Kühlkreis 8b des zweiten Leitungssystem 8. Bei der hier dargestellten Klimatisierungsanordnung 1 ist vorgesehen, dass zwischen dem inneren Kühlkreis 8a und dem äußeren Kühlkreis 8b eine Fluidverbindung besteht, die von einem Luftkanal 21 gebildet wird, der in Strömungsrichtung vor dem mindestens einen Schaltschrank 6a bzw. 6b mit dem inneren Kühlkreis 8a verbunden ist und der mittels eines Ventils 22.8 geöffnet (Fig. 6b) und geschlossen (Fig. 6a) werden kann. Ein weiterer Luftkanal 18" ist vom inneren Kühlkreis 8a abgezweigt und führt in einen Bereich außerhalb des Schienenfahrzeugs bzw. Klimageräts 3, wobei der weitere Luftkanal 18" ähnlich wie in den Figuren 3a) und b) bzw. 5a) und b) mittels eines Ventils 22.4" geöffnet (Fig. 6b) und geschlossen (Fig. 6a) werden kann. Auch kann der innere Kühlkreis 8a in Strömungsrichtung hinter dem weiteren Luftkanal 18" mittels eines Ventils 22.9 geöffnet (Fig. 6a) und geschlossen (Fig. 6b) werden. Schließlich kann der äußere Kühlkreis 8b in Strömungsrichtung hinter dem Luftkanal 21 mittels eines Ventils 22.10 geöffnet (Fig. 6a) und geschlossen (Fig. 6b) werden. In dem Fall, dass der Ventilator 10a defekt oder aus einem sonstigen Grund ausgeschaltet ist, können die Ventile 22.8 und 22.4" geöffnet und die Ventile 22.9 und 22.10 geschlossen werden. Im "Normalfall" können dagegen die Ventile 22.8 und 22.4" geschlossen und die Ventile 22.9 und 22.10 geöffnet sein. Auf diese Weise kann im Bedarfsfall (Fig. 6b) Außenluft unmittelbar durch den äußeren Kühlkreis 8b in den inneren Kühlkreis 8a und von da zu den Schaltschränken 6a und 6b geleitet werden, um diese ausreichend zu kühlen.

Im Falle eines Ausfalls der ersten Kühleinrichtung 4 bzw. des ersten Leitungssystems 5 kann die zweite Kühleinrichtung 7 bzw. das zweite Leitungssystem 8 weiter im "Wintermodus" (Fig. 6a) betrieben werden, allerdings mit einem relativ geringen Wirkungsgrad.

Wenn das System im "Wintermodus" ist und der Ventilator 10b ausfällt, strömt keine frische Luft in den Wärmetauscher, z.B. Luft/Luft-Wärmetauscher. Zur Behebung dieses Problems muss der Lufteinlass in einem Teil des Wagenkastens mit Überdruck, bedingt durch die Fahrzeuggeschwindigkeit, und der Luftauslass in einem Bereich mit niedrigem Druck, bedingt durch die Fahrzeuggeschwindigkeit, vorgesehen werden. Auf diese Weise garantiert der Druckunterschied eine Mindestströmung, so dass die Klimatisierungsanordnung sicher arbeiten kann, wenn auch mit einem geringen Wirkungsgrad.

Fällt der Ventilator 10a aus, kann über die zuvor anhand der Figuren 6a) und 6b) beschriebenen Ventile der geschlossene Kühlkreis 8a geöffnet werden um frische, wenn auch verschmutzte Luft direkt in die Schaltschränke zu leiten. Hierbei sollte die Klimatisierungsanordnung möglichst kurzfristig gereinigt und repariert werden. Dieser Fall ist in Fig. 6b) dargestellt.

Die besagten Ventile, die erlauben, dass die Frischluft direkt in die Schaltschränke geführt werden kann, können direkt in den Wärmetauscher integriert sein. Dabei ist es vorteilhaft, wenn die Ventile für Personal bzw. den Fahrzeugführer ohne weiteres zugänglich sind und während der Fahrt bedient werden können. Eine automatische Umschaltung ist aber auch denkbar.

Bei den Ventilen handelt es sich bevorzugt um Solenoid-Ventile mit Rückstellfeder. Das zuvor zu den Ventilen Gesagte gilt gleichermaßen für sämtliche Ventile sämtlicher Ausgestaltungen der Erfindung.

## Patentansprüche

1. Klimatisierungsanordnung (1) für einen Aufenthaltsraum (2), insbesondere Führerstand oder Passagierraum, eines Schienenfahrzeugs, insbesondere Triebfahrzeugs,
- mit einem Klimagerät (3) zur Regelung der Lufttemperatur im Aufenthaltsraum (2),
- mit einer ersten Kühleinrichtung (4), die in das Klimagerät (3) integriert ist,
- mit einem ersten Leitungssystem (5), das mit der ersten Kühleinrichtung (4) verbunden ist und das mindestens einen Luftkanal (5a,5b,5c,5d) aufweist, der zum Aufenthaltsraum (2) führt,
- mit mindestens einem Schaltschrank (6a,6b),
- mit einer zweiten Kühleinrichtung (7) und
- mit einem zweiten Leitungssystem (8), das mit der zweiten Kühleinrichtung (7) und mit dem mindestens einen Schaltschrank (6a,6b) verbunden ist und das mindestens einen Kühlkreis (8a,8b) aufweist,
- wobei die zweite Kühleinrichtung (7) in das Klimagerät (3) integriert ist, **dadurch gekennzeichnet dass**:
- der mindestens eine Kühlkreis (8a,8b) einen inneren Kühlkreis (8a), der die zweite Kühleinrichtung (7) mit dem mindestens einen Schaltschrank (6a,6b) verbindet, und einen äußeren Kühlkreis (8b), der die zweite Kühleinrichtung (7) mit einem Bereich außerhalb des Klimageräts (3) verbindet, umfasst und
- die zweite Kühleinrichtung (7) einen Wärmetauscher (9) aufweist, über den der äußere Kühlkreis (8b) mit dem inneren Kühlkreis (8a) thermisch verbunden ist, und der innere Kühlkreis (8a) und/oder der äußere Kühlkreis (8b) luftdurchströmt ist.

2. Klimatisierungsanordnung (1) nach Anspruch 1, **dadurch gekennzeichnet, dass** zwischen dem ersten Leitungssystem (5) und dem zweiten Leitungssystem (8) eine Fluidverbindung besteht, wobei insbesondere zwischen einem verbrauchte Luft aus dem Aufenthaltsraum (2) ableitenden Luftkanal (5a,5d), insbesondere einem verbrauchte Luft aus dem Aufenthaltsraum (2) in einen Bereich außerhalb des Klimageräts (3) ableitenden Luftkanal (5d), und dem zweiten Leitungssystem (8) eine Fluidverbindung besteht.

3. Klimatisierungsanordnung (1) nach Anspruch 2, **dadurch gekennzeichnet, dass** zwischen dem verbrauchte Luft aus dem Aufenthaltsraum (2) ableitenden Luftkanal (5a,5d), insbesondere dem verbrauchte Luft aus dem Aufenthaltsraum (2) in den Bereich außerhalb des Klimageräts (3) ableitenden Luftkanal (5d), und dem äußeren Kühlkreis (8b) eine Fluidverbindung besteht, die von einem Luftkanal (16) gebildet wird, der vorzugsweise mittels eines Ventils (22.1) geöffnet und geschlossen werden kann.

4. Klimatisierungsanordnung (1) nach Anspruch 2 oder 3, **dadurch gekennzeichnet, dass** zwischen dem verbrauchte Luft aus dem Aufenthaltsraum (2) ableitenden Luftkanal (5a,5d), insbesondere dem verbrauchte Luft aus dem Aufenthaltsraum (2) in den Bereich außerhalb des Klimageräts (3) ableitenden Luftkanal (5d), und dem inneren Kühlkreis (8a) eine Fluidverbindung besteht, die von einem Luftkanal (17) gebildet wird, der vorzugsweise mittels eines Ventils (22.3) geöffnet und geschlossen werden kann.

5. Klimatisierungsanordnung (1) nach einem der Ansprüche 2 bis 4, **dadurch gekennzeichnet, dass** zwischen einem dem Aufenthaltsraum (2) frische Luft zuführenden Luftkanal (5b,5c), insbesondere einem dem Aufenthaltsraum (2) zuvor abgeleitete und recycelte Luft zuführenden Luftkanal (5b), und dem zweiten Leitungssystem (8) eine Fluidverbindung besteht.

6. Klimatisierungsanordnung (1) nach einem der vorangehenden Ansprüche, **dadurch gekennzeichnet, dass** zwischen dem inneren Kühlkreis (8a) und dem äußeren Kühlkreis (8b) keine Fluidverbindung besteht.

7. Klimatisierungsanordnung (1) nach einem der vorangehenden Ansprüche, **dadurch gekennzeichnet, dass** zwischen dem inneren Kühlkreis (8a) und dem äußeren Kühlkreis (8b) eine Fluidverbindung besteht, die von einem Luftkanal (21) gebildet wird, der in Strömungsrichtung vor dem mindestens einen Schaltschrank (6a,6b) mit dem inneren Kühlkreis (8a) verbunden ist und der vorzugsweise mittels eines Ventils (22.8) geöffnet und geschlossen werden kann.

8. Klimatisierungsanordnung (1) nach einem der vorangehenden Ansprüche, **dadurch gekennzeichnet, dass** zwischen dem ersten Leitungssystem (5) und dem zweiten Leitungssystem (8) keine Fluidverbindung besteht und insbesondere das erste Leitungssystem (5) und das zweite Leitungssystem (8) voneinander unabhängig sind.

9. Klimatisierungsanordnung (1) nach einem der vorangehenden Ansprüche, **dadurch gekennzeichnet, dass** das zweite Leitungssystem (8) mit mindestens zwei Schaltschränken (6a,6b) verbunden ist, vorzugsweise derart, dass der mindestens eine Kühlkreis (8a,8b) in Strömungsrichtung vor den Schaltschränken (8a,8b) geteilt ist.

10. Klimatisierungsanordnung (1) nach einem der vorangehenden Ansprüche, **dadurch gekennzeichnet, dass** der innere Kühlkreis (8a) hermetisch dicht geschlossen ist.

11. Klimatisierungsanordnung (1) nach einem der vorangehenden Ansprüche, **dadurch gekennzeichnet, dass** der äußere Kühlkreis (8b) mit Außenluft und/oder Abluft aus einem Fahrgastraum durchströmt ist.

12. Klimatisierungsanordnung (1) nach einem der vorangehenden Ansprüche, **dadurch gekennzeichnet, dass** das Klimagerät (3) vertikal über dem Aufenthaltsraum (2) und/oder auf dem Dach des Schienenfahrzeugs angeordnet ist, wobei das Klimagerät (3) vorzugsweise eine von der Außenseite des Schienenfahrzeugs zugängliche Revisionsöffnung aufweist.

13. Klimatisierungsanordnung (1) nach einem der vorangehenden Ansprüche, **dadurch gekennzeichnet, dass** der mindestens eine Schaltschrank (6a,6b) in einem Führerstand, vorzugsweise an der Rückwand oder am Bedienpult des Führerstands, oder zwischen einem Passagierraum und einem Führerstand, insbesondere in einem Elektronikraum (23), der vorzugsweise mit einer Brandschutzwand (24) vom Führerstand (2) getrennt ist, angeordnet ist.

14. Klimatisierungsanordnung (1) nach einem der vorangehenden Ansprüche, **dadurch gekennzeichnet, dass** die erste Kühleinrichtung (4) über das Bordnetz des Schienenfahrzeugs und die zweite Kühleinrichtung (7) über eine Batterie mit Spannung versorgt wird.

15. Schienenfahrzeug mit einer Klimatisierungsanordnung (1) nach einem der vorangehenden Ansprüche.

## Claims

1. An air-conditioning arrangement (1) for a habitable room (2), particularly a driver's cab or passenger compartment, of a rail vehicle, particularly a traction vehicle,
- with an air conditioner (3) for controlling the air temperature in the habitable room (2),
- with a first cooling device (4) that is integrated into the air conditioner (3),
- with a first line system (5) that is connected to the first cooling device (4) and features at least one air duct (5a, 5b, 5c, 5d) leading to the habitable room (2),
- with at least one switch cabinet (6a, 6b),
- with a second cooling device (7), and
- with a second line system (8) that is connected to the second cooling device (7) and to the at least one switch cabinet (6a, 6b) and features at least one cooling circuit (8a, 8b),
- wherein the second cooling device (7) is integrated into the air conditioner (3), **characterized in that**
- the at least one cooling circuit (8a, 8b) comprises an internal cooling circuit (8a) that connects the second cooling device (7) to the at least one switch cabinet (6a, 6b) and an external cooling circuit (8b) that connects the second cooling device (7) to an area outside the air conditioner (3), and
- the second cooling device (7) features a heat exchanger (9), by means of which the external cooling circuit (8b) is thermally connected to the internal cooling circuit (8a), and air flows through the internal cooling circuit (8a) and/or the external cooling circuit (8b).

2. The air-conditioning arrangement (1) according to Claim 1, **characterized in that** a fluidic connection exists between the first line system (5) and the second line system (8), wherein a fluidic connection exists, in particular, between an air duct (5a, 5d) that removes stale air from the habitable room (2), particularly an air duct (5d) that conveys stale air from the habitable room (2) into an area outside the air conditioner (3), and the second line system (8).

3. The air-conditioning arrangement (1) according to Claim 2, **characterized in that** a fluidic connection exists between the air duct (5a, 5d) that removes stale air from the habitable room (2), particularly the air duct (5d) that conveys stale air from the habitable room (2) into the area outside the air conditioner (3), and the external cooling circuit (8b), which fluidic connection is formed by an air duct (16) that preferably can be opened and closed by means of a valve (22.1).

4. The air-conditioning arrangement (1) according to Claim 2 or 3, **characterized in that** a fluidic connection exists between the air duct (5a, 5d) that removes stale air from the habitable room (2), particularly the air duct (5d) that conveys stale air from the habitable room (2) into the area outside the air conditioner (3), and the internal cooling circuit (8a), which fluidic connection is formed by an air duct (17) that preferably can be opened and closed by means of a valve (22.3).

5. The air-conditioning arrangement (1) according to one of Claims 2 to 4, **characterized in that** a fluidic connection exists between an air duct (5b, 5c) that supplies fresh air to the habitable room (2), particularly an air duct (5b) that supplies previously removed and recycled air to the habitable room (2), and the second line system (8).

6. The air-conditioning arrangement (1) according to one of the preceding claims, **characterized in that** no fluidic connection exists between the internal cooling circuit (8a) and the external cooling circuit (8b).

7. The air-conditioning arrangement (1) according to one of the preceding claims, **characterized in that** a fluidic connection exists between the internal cooling circuit (8a) and the external cooling circuit (8b), which fluidic connection is formed by an air duct (21) that is connected to the internal cooling circuit (8a) upstream of the at least one switch cabinet (6a, 6b) referred to the flow direction and preferably can be opened and closed by means of a valve (22.8).

8. The air-conditioning arrangement (1) according to one of the preceding claims, **characterized in that** no fluidic connection exists between the first line system (5) and the second line system (8) and the first line system (5) and the second line system (8) particularly are independent of one another.

9. The air-conditioning arrangement (1) according to one of the preceding claims, **characterized in that** the second line system (8) is connected to at least two switch cabinets (6a, 6b), preferably in such a way that the at least one cooling circuit (8a, 8b) is divided upstream of the switch cabinets (8a, 8b) referred to the flow direction.

10. The air-conditioning arrangement (1) according to one of the preceding claims, **characterized in that** the internal cooling circuit (8a) is hermetically closed.

11. The air-conditioning arrangement (1) according to one of the preceding claims, **characterized in that** outside air and/or exhaust air from a passenger compartment flows through the external cooling circuit (8b).

12. The air-conditioning arrangement (1) according to one of the preceding claims, **characterized in that** the air conditioner (3) is arranged vertically above the habitable room (2) and/or on the roof of the rail vehicle, wherein the air conditioner (3) preferably features an inspection opening that is accessible from the outside of the rail vehicle.

13. The air-conditioning arrangement (1) according to one of the preceding claims, **characterized in that** the at least one switch cabinet (6a, 6b) is arranged in a driver's cab, preferably on the rear wall or on the operating panel of the driver's cab, or between a passenger compartment and a driver's cab, particularly in an electronics compartment (23) that is preferably separated from the driver's cab (2) by a fire barrier (24).

14. The air-conditioning arrangement (1) according to one of the preceding claims, **characterized in that** the first cooling device (4) is supplied with power by the on-board electrical system of the rail vehicle and the second cooling device (7) is supplied with power by a battery.

15. A rail vehicle with an air-conditioning arrangement (1) according to one of the preceding claims.

## Revendications

1. Agencement de climatisation (1) pour salle de séjour (2), en particulier poste de conducteur ou salle de passagers, d'un véhicule ferroviaire, en particulier d'une locomotive, comportant
- un climatiseur (3) pour réguler la température de l'air dans la salle de séjour (2),
- un premier dispositif de refroidissement (4) qui est intégré dans le climatiseur (3),
- un premier système de canalisation (5) qui est raccordé au premier dispositif de refroidissement (4) et qui présente au moins un canal à air (5a, 5b, 5c, 5d) qui mène à la salle de séjour (2),
- au moins une armoire électrique (6a, 6b),
- un second dispositif de refroidissement (7) et
- un second système de canalisation (8) qui est raccordé au second dispositif de refroidissement (7) et à l'au moins une armoire électrique (6a, 6b) et qui présente au moins un circuit de refroidissement (8a, 8b),
- le second dispositif de refroidissement (7) étant intégré dans le climatiseur (3), **caractérisé en ce que** :
- l'au moins un circuit de refroidissement (8a, 8b) comprend un circuit de refroidissement interne (8a) qui raccorde le second dispositif de refroidissement (7) à l'au moins une armoire électrique (6a, 6b), et un circuit de refroidissement externe (8b) qui raccorde le second dispositif de refroidissement (7) à une zone située en dehors du climatiseur (3), et
- le second dispositif de refroidissement (7) présente un échangeur de chaleur (9) par lequel le circuit de refroidissement externe (8b) est raccordé thermiquement au circuit de refroidissement interne (8a), et que de l'air passe dans le circuit de refroidissement interne (8a) et/ou le circuit de refroidissement externe (8b).

2. Agencement de climatisation (1) selon la revendication 1, **caractérisé en ce que**, entre le premier système de canalisation (5) et le second système de canalisation (8), il existe une liaison de fluide, sachant que, en particulier entre un canal à air (5a, 5d) évacuant de l'air usagé de la salle de séjour (2), notamment un canal à air (5d) évacuant de l'air usagé de la salle de séjour (2) dans une zone située à l'extérieur du climatiseur (3), et le second système de canalisation (8), il existe une liaison de fluide.

3. Agencement de climatisation (1) selon la revendication 2, **caractérisé en ce que**, entre le canal à air (5a, 5d) évacuant de l'air usagé de la salle de séjour (2), en particulier le canal à air (5d) évacuant de l'air usagé de la salle de séjour (2) dans la zone située à l'extérieur du climatiseur (3), et le circuit de refroidissement externe (8b), il existe une liaison de fluide qui est constituée par un canal à air (16) qui peut de préférence être ouvert et fermé au moyen d'une soupape (22.1).

4. Agencement de climatisation (1) selon la revendication 2 ou 3, **caractérisé en ce que**, entre le canal à air (5a, 5d) évacuant de l'air usagé de la salle de séjour (2), en particulier le canal à air (5d) évacuant de l'air usagé de la salle de séjour (2) dans la zone située à l'extérieur du climatiseur (3), et le circuit de refroidissement interne (8a), il existe une liaison de fluide qui est constituée par un canal à air (17) qui peut de préférence être ouvert et fermé au moyen d'une soupape (22.3).

5. Agencement de climatisation (1) selon une des revendications 2 à 4, **caractérisé en ce que**, entre un canal à air (5b, 5c) acheminant à la salle de séjour (2) de l'air frais, en particulier un canal à air (5b) acheminant à la salle de séjour (2) de l'air préalablement dérivé et recyclé, et le deuxième système de canalisation (8), il existe une liaison de fluide.

6. Agencement de climatisation (1) selon une des revendications précédentes, **caractérisé en ce que**, entre le circuit de refroidissement interne (8a) et le circuit de refroidissement externe (8b), il n'existe pas de liaison de fluide.

7. Agencement de climatisation (1) selon une des revendications précédentes, **caractérisé en ce que**, entre le circuit de refroidissement interne (8a) et le circuit de refroidissement externe (8b), il existe une liaison de fluide qui est formée par un canal à air (21) qui est raccordé dans le sens d'écoulement en amont de l'au moins une armoire électrique (6a, 6b) au circuit de refroidissement interne (8a) et qui peut être ouvert et fermé de préférence au moyen d'une soupape (22.8).

8. Agencement de climatisation (1) selon une des revendications précédentes, **caractérisé en ce que**, entre le premier système de canalisation (5) et le second système de canalisation (8), aucune liaison de fluide n'existe et en particulier le premier système de canalisation (5) et le second système de canalisation (8) sont indépendants l'un de l'autre.

9. Agencement de climatisation (1) selon une des revendications précédentes, **caractérisé en ce que** le second système de canalisation (8) est raccordé à au moins deux armoires électriques (6a, 6b), de préférence de manière à ce que l'au moins un circuit de refroidissement (8a, 8b) soit divisé en amont des armoires électriques (8a, 8b) dans le sens d'écoulement.

10. Agencement de climatisation (1) selon une des revendications précédentes, **caractérisé en ce que** le circuit de refroidissement interne (8a) est fermé hermétiquement.

11. Agencement de climatisation (1) selon une des revendications précédentes, **caractérisé en ce que** le circuit de refroidissement externe (8b) est parcouru par de l'air extérieur et/ou de l'air d'échappement venant d'un habitacle.

12. Agencement de climatisation (1) selon une des revendications précédentes, **caractérisé en ce que** le climatiseur (3) est disposé verticalement au-dessus de la salle de séjour (2) et/ou sur le toit du véhicule ferroviaire, le climatiseur (3) présentant de préférence une ouverture de révision accessible depuis le côté extérieur du véhicule ferroviaire.

13. Agencement de climatisation (1) selon une des revendications précédentes, **caractérisé en ce que** l'au moins une armoire électrique (6a, 6b) est disposée dans une cabine de conducteur, de préférence sur la paroi arrière ou sur le pupitre de commande de la cabine de conducteur, ou entre une salle de passagers et une cabine de conducteur, en particulier dans une salle électronique (23) qui est de préférence séparée de la cabine de conducteur (2) par une cloison antifeu (24).

14. Agencement de climatisation (1) selon une des revendications précédentes, **caractérisé en ce que** le premier dispositif de refroidissement (4) est alimenté en électricité par le réseau de bord du véhicule ferroviaire et le second dispositif de refroidissement (7) par une batterie.

15. Véhicule ferroviaire englobant un agencement de climatisation (1) selon une des revendications précédentes.
